(19) Europäisches Patentamt
European Patent Office
Office européen des brevets

(11) **EP 1 921 431 B1**

(12) **EUROPEAN PATENT SPECIFICATION**

(45) Date of publication and mention
of the grant of the patent:
**03.02.2016 Bulletin 2016/05**

(51) Int Cl.:
*G01K 13/02* [(2006.01)]   *G01K 1/14* [(2006.01)]

(21) Application number: **07021766.6**

(22) Date of filing: **09.11.2007**

(54) **Integrated sensor including a pressure sensor and a temperature sensor**

Integrierter Sensor mit einem Drucksensor und einem Temperatursensor

Capteur intégré comprenant un détecteur de pression et un détecteur de température

(84) Designated Contracting States:
**DE**

(30) Priority: **10.11.2006 JP 2006305260**

(43) Date of publication of application:
**14.05.2008 Bulletin 2008/20**

(73) Proprietor: **Fuji Electric Co., Ltd.**
**Kawasaki-shi**
**Kanagawa (JP)**

(72) Inventors:
• **Toshiaki Kaminaga**
**Ibaraki 312-8503 (JP)**
• **Jun Kubo**
**Ibaraki 312-8503 (JP)**
• **Kazunori Saito**
**Tokyo 141-0032 (JP)**
• **Kimihiro Ashino**
**Tokyo 141-0032 (JP)**
• **Katsumichi Ueyanagi**
**Tokyo 141-0032 (JP)**

(74) Representative: **MERH-IP Matias Erny Reichl**
**Hoffmann**
**Patentanwälte PartG mbB**
**Paul-Heyse-Strasse 29**
**80336 München (DE)**

(56) References cited:
GB-A- 2 179 161          US-A- 4 420 738
US-A1- 2003 037 610    US-B1- 6 272 913

**EP 1 921 431 B1**

**Description**

The present invention relates in general to a temperature sensor for sensing the temperature of a gas. More specifically, the invention relates to an integrated sensor that includes a temperature sensor, which has incorporated therein a temperature sensor element for measuring the temperature of a gas, and a pressure sensor element.

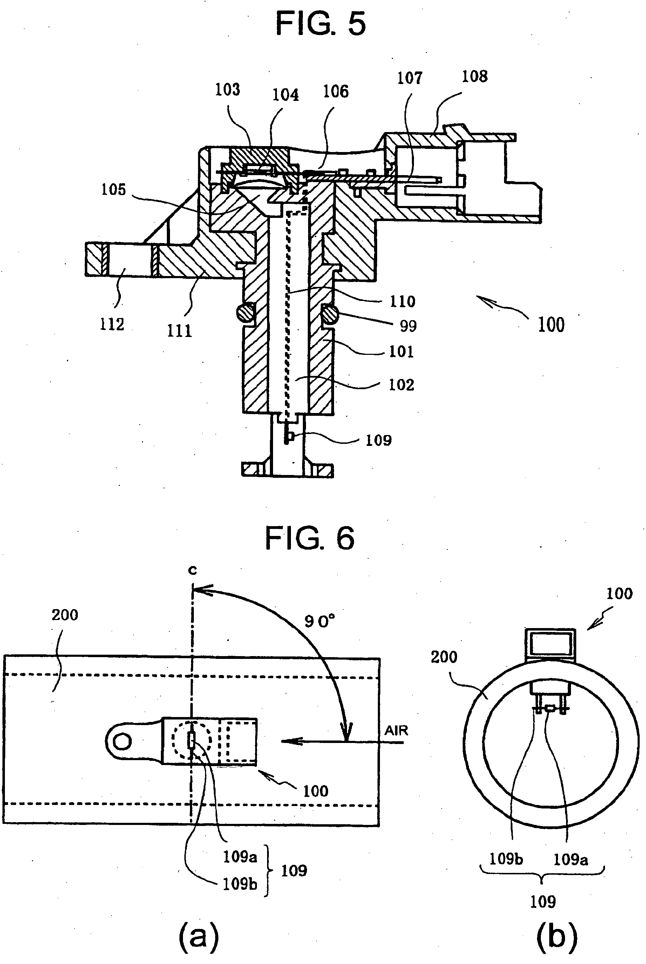

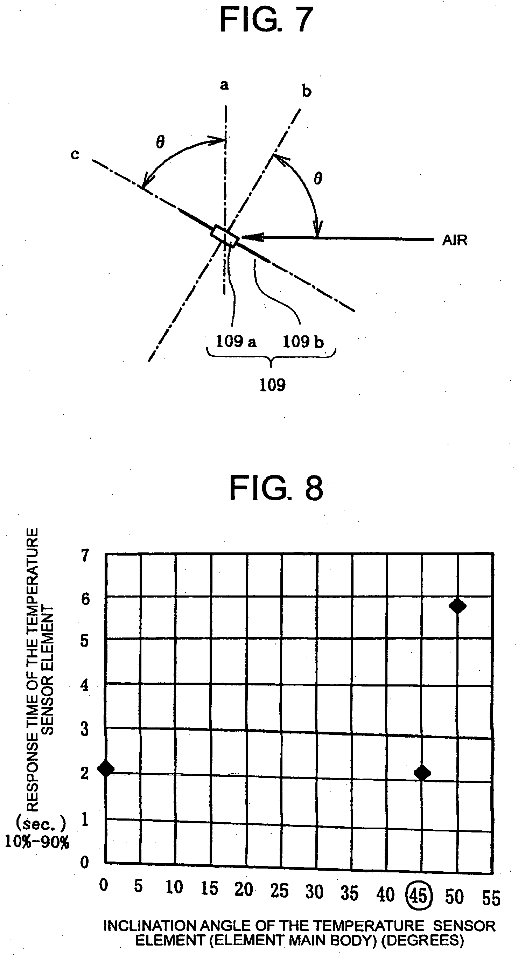

Figs. 6 and 7 illustrate an example of an integrated sensor that includes a pressure sensor integrated with a temperature sensor, which is set up in an intake manifold of a vehicle and measures the temperature and pressure of intake air of the intake manifold. Fig. 6 is a vertical cross-sectional view of a central part of an integrated sensor 100. Fig. 7 is a plan view showing the integrated sensor 100 of Fig. 6 installed in a position to measure the pressure within an intake manifold 200 of a vehicle. The integrated sensor of Figs. 6 and 7 is internal prior art of the applicant.

As shown in Fig. 6, a cylindrical pressure introducing port 101, configured to be inserted into an opening provided in the intake manifold 200 as shown in Fig. 7, extends from a main body 111 of the sensor 100. A gasket 99 is provided to seal the opening around the cylindrical pressure introducing port 101 when it is inserted into the manifold 200, thereby preventing air from escaping from the pressure manifold 200 during engine operation. A pressure inlet 102 is located on a central axis of the pressure introducing port 101. A pressure sensor element 104 mounted on a cell case 103 is disposed on an upper end portion of the pressure introducing port 101, and is connected to a connector pin 107 via a lead terminal 106. Note that a plurality of connector pins 107 are provided only one being visible. The connector pins 107 in turn are connectable to a connector (not shown) that is inserted within a connector socket 108 that is formed integral with the main body 111. A pressure detection chamber 105 communicating with the pressure inlet 102 is formed below the pressure sensor element 104.

The pressure sensor element 104 is formed by bridge-connecting a plurality of semiconductor strain gauges on a diaphragm composed of single-crystal silicon or the like. When the diaphragm is deformed by a change of pressure in the pressure detection chamber 105, the resistance of the semiconductor strain gauges is changed by a piezoelectric effect in accordance with the volume of the deformation. Based on this principle, the pressure of the pressure detection chamber 105, which is the air pressure within the intake manifold 200, can be detected by detecting a voltage signal equivalent to the gauge resistance ratio.

Furthermore, a temperature sensor element 109 for measuring the temperature of air within the intake manifold 200 is disposed on a line extending along an axial direction of the pressure introducing port 101, and a lead wire 110 passes through the pressure inlet 102 and connects the temperature sensor element 109 to one of the connector pins 107. The temperature sensor element 109 is provided in order to detect the temperature of the air, as the air pressure to be measured by the pressure sensor element 104 is related to the air temperature. The temperature sensor element 109 (for example, a thermistor) includes a substantially cylindrical sensor element body 109a and a pair of lead terminals 109b that extend from both ends of the substantially cylindrical sensor element body along an axial direction thereof.

The main body 111 is formed so as to surround an upper part of the pressure introducing port 101, and the connector socket 108 is configured to form a part of the main body 111 as described above. It should be noted that reference numeral 112 represents a mounting hole for fixing the integrated sensor 100 to the intake manifold 200 with a screw, bolt or some other mechanical attachment mechanism.

As stated above, Fig. 7 illustrates the integrated sensor 100 installed on or attached to the intake manifold 200 of a vehicle engine. The sensor element body 109a is disposed such that a central axis (c) of the sensor element body 109a is disposed perpendicular to the air flow direction in the intake manifold 200. As shown in Figs. 7(a) and 7(b), the position at which the integrated sensor 100 is attached to the intake manifold 200 is called "ideal attachment position" for the purposes of this discussion. In other words, in the integrated sensor 100 having the structure shown in Fig. 6 and Fig. 7, it is necessary to attach the integrated sensor 100 to the intake manifold 200 such that the connector pins 107 become parallel to the central axis of the intake manifold 200 in order for the central axis of the sensor element body 109a to be perpendicular to the air flow direction.

The above-described ideal mounting position, however, places limitations on vehicle designers as to where and how the integrated sensor 100 is to be positioned and oriented when installed in a vehicle.

The document GB 2 179 161 A discloses a direct-heated flow measuring apparatus including a film resistor having a substrate supported by a supporting member in a tubular passage of an intake manifold. The film resistor is in parallel to a fluid stream within the passage, and at least one face of the substrate is sloped with respect to the fluid stream. As a result, a boundary region or stagnation region is not generated at least on the upstream side of the film resistor, thus avoiding or suppressing the adhesion of suspended particles thereto. The film resistor is the shape of either an elongated rectangle or two rectangles combined to form a right angle. One end (supported end) of the film resistor is supported by the supporting member and the other end (free end) is exposed to the fluid stream. The film resistor has a platinum resistance pattern in the shape of two lead portions extending in parallel from the supported end towards the free end. At the free end the two lead portions are connected by a pattern shaped like an H of an outline font thereby creating two meandering resistance portions connected in parallel and extending in parallel to the short side of the film resistor. In one embodiment, the film resistor has the shape of the elongated rectangle but is supported in an inclined manner by the supporting member so as to form an angle of 20° to 50° with the direction of the air stream. The purpose of the angle is to avoid or suppress the adhesion of suspended particles at the side facing the upstream side of the air stream.

The document US 6,820,479 discloses a device for determining at least one parameter of a medium flowing in a line. The device comprises, within a measuring housing, a sensor carrier including a sensor cavity and at least one sensor element arranged on the sensor carrier in the sensor cavity. The measuring housing with the sensor element is configured to be introduced into the flowing medium and to determine the parameter. The sensor carrier and the sensor element may be arranged in different ways within measuring housing. In one case the sensor carrier is arranged such that a longitudinal axis of the sensor carrier is perpendicular to the main flow direction of the medium, and a longitudinal axis of sensor element extends parallel to the longitudinal axis of the sensor carrier. In another case, the sensor element is arranged in sensor carrier with its longitudinal axis inclined relative to the longitudinal axis of the sensor carrier. The oncoming-flow and circumflow properties of sensor element and of sensor carrier may be improved using these arrangements. Furthermore, an orientation of sensor element with respect to main flow direction 16 may thereby be adjusted.

The document US 6,272,913 B1 discloses an apparatus for detecting the pressure and temperature in the intake tube of an internal combustion engine.

It is an object of the present invention to provide an arrangement of a sensor attached to a tubular object that is not limited to the above-described ideal mounting position but may be mounted within a relatively wide angular range and yet obtain a desired response speed of a temperature sensor element of the sensor.

This object is achieved by a sensor as claimed in claim 1. Preferred embodiments of the invention are defined in the dependent claims.

According to the present invention, even if the sensor is attached to the tubular object (also referred to as "object of attachment" in this text) at an angle of $\theta_{rq}$ degrees with respect to the ideal attachment position, a response speed within an allowable range of the temperature sensor element can be obtained by disposing the sensor element body of the temperature sensor element at an inclination angle of $\theta_{pos}$ degrees for satisfying the equation, $(\theta_{rq} - \theta_{allow}) \leq \theta_{pos} \leq (\theta_{rq} + \theta_{allow})$. The inclination angle $\theta_{pos}$ can be calculated extremely easily and the connection fittings and the lead wires for acquiring the inclination angle $\theta_{pos}$ can also be processed easily, thus the present invention can be realized at low cost.

The invention will be described with reference to certain preferred embodiments thereof and the accompanying drawings, wherein:

Fig. 1    is a diagram for explaining the principle of embodiments of the present invention;

Fig. 2    is a perspective view showing a first embodiment of the present invention;

Fig. 3    is a perspective view showing a second embodiment of the present invention;

Fig. 4    is a side view showing an operation of the technology using a sensor as shown in Fig. 6;

Fig. 5    is a vertical cross-sectional view of the central part of an example of an integrated sensor;

Fig. 6    is a plan view and a right side view each showing a usage state of the integrated sensor of Fig. 5;

Fig. 7    is a diagram for explaining an inclination angle of a temperature sensor element; and

Fig. 8    is a diagram showing the relationship between the inclination angle and a response time of the temperature sensor element.

As described above, the conventional practice in mounting an integrated sensor 100 is to locate the sensor at an ideal mounting position such that the temperature sensor element 109 is perpendicular to the air flow, and such a required positioning places limitations on vehicle designers with regard to the positioning of the integrated sensor 100 on an intake manifold. The present invention is based, in part, on the recognition that the directionality of the temperature sensor element 109 is limited to a certain level and, even if the sensor element body 109a is slightly inclined toward the direction in which the air passes through, an allowable response speed can be practically obtained.

For example, it has been experimentally determined that the central axis (c) of the sensor element body 109a may be positioned within a range of ± 45° with respect to the position at which the central axis (c) is perpendicular to the direction in which the air within the intake manifold 200 passes through (the position of the central axis (c) shown in Fig. 6(a)). Accordingly, in contrast to conventional practice, the integrated sensor 100 may be attached at an angle to the intake manifold 200 within this allowable angular range. The discovery of this allowable range by the present inventor provides new mounting methods that can be employed by vehicle designers, namely, the sensor may be oriented at a mounting position on an intake manifold, such that the central axis of the columnar sensor element body is offset from an axis perpendicular to the air flow by an angle ± 9. wherein 0° < θ ≤ 45°; and then attached to the intake manifold a fastening mechanism.

As described above, the inclination angle of the sensor element body 109a with respect to the direction in which the air passes through the manifold 200, i.e., the inclination angle of the integrated sensor 100 attached to the intake manifold 200, needs to be within a predetermined range in order to avoid delays in response time of the temperature sensor 109. While the discovery of this range provides significant benefits, it would be further preferable, to permit the integrated sensor 100 to be significantly inclined when it is attached to the intake manifold 200, thereby allowing an even greater flexibility in the layout of the components of the engine.

For example, as shown in Fig. 7, suppose that the actual central axis (c) of the sensor element body 109a is inclined by an angle θ with respect to an axis (a), which is perpendicular to the direction in which the air passes through manifold (namely, the ideal central axis of the temperature sensor). An axis (b), also shown in Fig. 7, is an axis that is perpendicular to the central axis (c) and, in the integrated sensor 100 with the structure shown in Fig. 5 and Fig. 6, is an axis that corresponds to the longitudinal axis of the integrated sensor 100 and is parallel to the connector pins 107. When the inclination angle 9 between the axis (a) and the axis (c) exceeds 45°, a delay occurs in a response of the temperature sensor element 109. For this reason, the temperature of the air within the intake manifold 200 cannot be measured accurately and the demands of high engine control accuracy cannot be satisfied.

Fig. 8 is a diagram showing the relationship between the inclination angle of the sensor element body 109a and a response time of the temperature sensor element 109. It should be noted that the inclination angle of the sensor element body 109a is the angle θ mentioned above and shown in Fig. 7. The response time of the temperature sensor element 109 is the time required for the output voltage of the temperature sensor element 109 to reach 90 % of $|V_1 - V_2|$ from 10 % when the temperature of the air to be measured changes from 25 C° (the temperature sensor output voltage at this moment is $V_1$) to 100 °C ($V_2$ at this moment). As is clear from Fig. 8, when the inclination angle of the sensor element body 109a is 45°, a response time that is substantially the same as the response time obtained when the inclination angle is 0° is obtained, but it has been experimentally confirmed that the response time becomes significantly slow when the inclination angle is 50° or greater.

As described above, the technology shown in Fig. 5 and Fig. 6 suffers from a limitation, namely, if the inclination angle of the integrated sensor 100 attached to the intake manifold 200 or the inclination angle of the sensor element body 109a of the temperature sensor element 109 varies from the predetermined range described above, the response time of the temperature sensor element 109 is prolonged and engine control accuracy deteriorates.

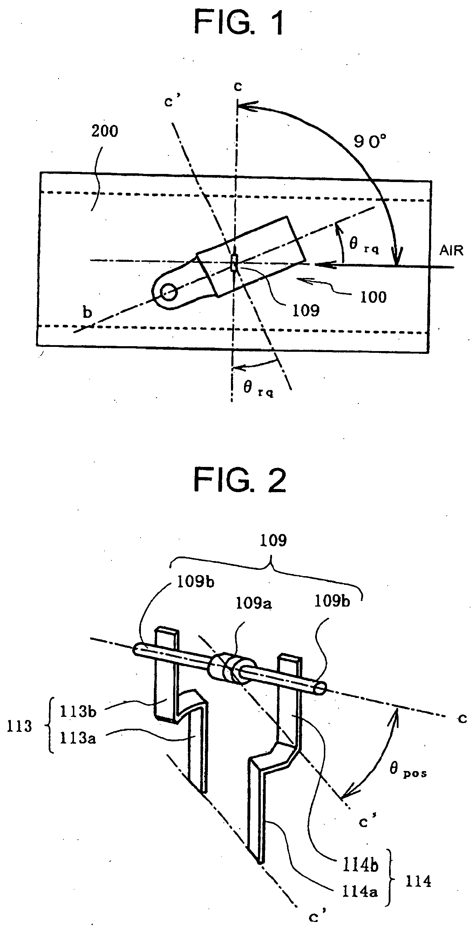

The operating principles of a preferred embodiment of the present invention will now be described with reference to Fig. 1, which is a plan view illustrating the integrated sensor 100 attached to the intake manifold 200. In Fig. 1, in the case in which an angle between a longitudinal axis (b), which passes through the length of the integrated sensor 100, and the direction in which the air passes through the manifold 200 is $\theta_{rq}$ because of layout limitations, the sensor element body 109a is also disposed at the angle $\theta_{rq}$ with respect to a latitudinal axis (c'), which passes through the width of the integrated sensor 100 . Accordingly, the central axis (c) of the sensor element body 109a at this mounting position is perpendicular to the direction in which the air passes through the manifold 200, even though the integrated sensor 100 is substantially inclined from the ideal mounting position described above. Thus the value of the response speed of the temperature sensor element 109 is maintained at an optimal level. In other words, optimal performance can be maintained by offsetting the central axis of the sensor element body 109a of the temperature sensor element 109 with respect to the latitudinal axis by the same angle at which the body of the integrated sensor 100 (specifically the longitudinal axis thereof) is offset from the mounting position illustrated in Fig. 6. Further, if the sensor element body 109a is positioned within a range of ± 45° with respect to the central axis (c) shown in Fig. 1, then as described above with respect to the sensor of Fig. 5, a good response speed can be practically obtained just as in the case of the conventional sensor. Therefore, the central axis of the sensor element body 109a may be actually disposed at an angle of $(\theta_{rq} - 45°)$ through $(\theta_{rq} + 45°)$ degrees with respect to the latitudinal axis (c') of the integrated sensor 100. For example, when the inclination angle $\theta_{rq}$ obtained when attaching the integrated sensor 100 is 50° (the inclination angle from the ideal attachment position), a good response speed can be practically obtained by disposing or offsetting the sensor element body 109a at an angle of 5° through 95° with respect to the latitudinal axis (c'). Accordingly, if the inclination angle of the sensor element body 109a with respect to the latitudinal axis (c') is $\theta_{pos}$, the sensor element body 109a may be inclined within a range of $(\theta_{rq} - 45°) \leq \theta_{pos} \leq (\theta_{rq} + 45°)$. Therefore, by taking the allowable angle of the response speed, which is 45°, as $\theta_{allow}$, generally the sensor element body 109a may be inclined according to the following Equation 1.

$$(\theta_{rq} - \theta_{allow}) \leq \theta_{pos} \leq (\theta_{rq} + \theta_{allow}) \tag{1}$$

Viewed from another perspective, the central axis (c) of the sensor element body 109a must be counter-rotated or offset with respect to the latitudinal axis of the main body 111 in the same amount as the longitudinal axis of the main body 111 is rotated with respect to the air flow direction. Thus, if the main body 111 is rotated by 50 degrees with respect to the direction of air flow, then the central axis (c) of the sensor element body 109a would have to be counter-rotated back by 50 degrees with respect to the latitudinal axis (c') of the main body 111 in order to return the central axis (c) to a position perpendicular to the air flow. Using Fig. 7 to illustrate the above, with the longitudinal axis of the main body 111 being axis (b), the central axis (c) shown overlying the latitudinal axis (c') at the indicated angle θ of rotation of the longitudinal axis from the direction of air flow, it is necessary to offset the central axis (c) by the same angle θ in order to counter-rotate the sensor element body 109a back to line (a) at which point the central axis (c) would be perpendicular to airflow.

Keeping in mind that the sensor element body 109a has an acceptable performance in a range of plus or minus 45 degrees without any offset, the central axis (c) of the sensor element body 109a could be set anywhere between 5 to 95 degrees offset for a 50 degree rotation of the main body 111. Accordingly, while according to Fig. 5 the central axis (c) of the sensor element body 109a is coaxial with the latitudinal axis (c') of the main body 111, the central axis (c) of the sensor element body 109a is offset from the latitudinal axis (c') of the main body 111 in the present preferred embodiment of the invention. The amount of offset corresponds to the amount of rotation of the longitudinal axis of the main body 111 from the direction of air flow.

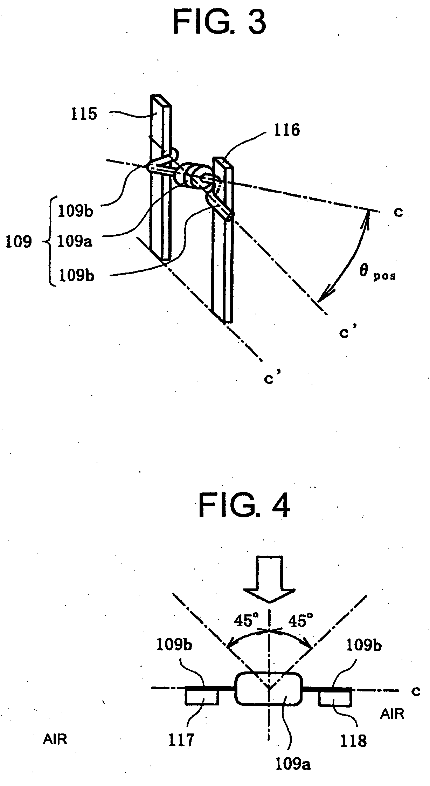

Fig. 2 and Fig. 3 will be used to explain embodiments of a sensor according to the invention in which the abovementioned inclination angle $\theta_{pos}$ is acquired by the sensor element body 109a of the temperature sensor element 109.

Referring now to Fig. 2, a perspective view of a first embodiment of the invention is illustrated. This embodiment relates to the structure of connection fittings 113 and 114 for connecting the temperature sensor element 109 to the lead wire shown in Fig. 5. Specifically, in the connection fittings 113 and 114, rear end portions 113a and 114a of the respective connection fittings are disposed along the latitudinal axis (c'), and a leading end portion 113b that is bent from the rear end portion 113a and a leading end portion 114b that is bent from the rear end portion 114a are subjected to a bending process so that the leading end portions are offset from the latitudinal axis and are configured such that the central axis (c) of the temperature sensor element body 109a acquires the angle $\theta_{pos}$ with respect to the latitudinal axis (c'). The lead terminals 109b, 109b of the temperature sensor element 109, which are disposed coaxially, are connected to the leading end portions 113b, 114b respectively by soldering, whereby the central axis (c) of the sensor element body 109a is inclined by $\theta_{pos}$ degrees with respect to the latitudinal axis (c'). It should be noted that either one of the leading end portions 113b and 114b of the respective connection fittings 113 and 114 may be subjected to a bending process as long as the angle $\theta_{pos}$ can be acquired. Moreover, the structures of the connection fittings 113 and 114 are not limited to those shown in the drawing.

By setting the inclination angle $\theta_{pos}$ within the range expressed by Equation 1 shown above, the sensor element body 109a is disposed at an angle of $\theta_{pos}$ degrees, which is within the allowable range, with respect to the latitudinal axis (c'), thus a desired response speed can be obtained. Here, the temperature sensor element 109 is disposed on a line extending along the axial direction of the pressure introducing port 101 shown in Fig. 5.

Next, Fig. 3 is a perspective view showing a part of a second embodiment of the sensor according to the present invention. This embodiment is an example in which straight connection fittings 115 and 116 are disposed parallel to each other along the latitudinal axis (c'), while the lead terminals 109b of the temperature sensor element 109 are subjected to forming and then connected to the connection fittings 115 and 116 respectively, to thereby acquire the inclination angle $\theta_{pos}$.

Specifically, as shown in Fig. 3, the lead terminals 109b and 109b disposed coaxially with sensor element body 109a are originally subjected to a bending process to acquire the angle $\theta_{pos}$, and these bent lead terminals 109b and 109b are connected to the connection fittings 115 and 116, which are disposed along the latitudinal axis (c'), respectively by soldering or the like, whereby the central axis (c) of the sensor element body 109a is inclined by $\theta_{pos}$ decrees with respect to the central axis (c'). In this embodiment as well, the inclination angle $\theta_{pos}$ is set within the range expressed by Equation 1 shown above, whereby the sensor element body 109a is disposed at an angle of $\theta_{pos}$ degrees with respect to the original central axis (c'), thus a desired response speed can be obtained.

Fig. 4 is a diagram showing an operation of the conventional technology shown in Fig. 5 and Fig. 6. In the technology shown in Fig. 4, a desired response speed is obtained, only when the central axis (c) of the sensor element body 109a is positioned within a range of $\pm 45°$ with respect to the position at which the central axis (c) is perpendicular to the direction in which the air passes through. Specifically, the allowable angular range obtained when the integrated sensor 100 is attached at an angle to the intake manifold 200 is narrow.

The embodiments explained above describe the pressure sensor integrated with a temperature sensor, but the principle of the present invention can be applied to a temperature sensor that does not have a pressure sensor element but has only a temperature sensor element. Further, the fastening mechanism can be any type of mechanism, including adhesive types instead of mechanical types, that attaches the sensor to the object of attachment. Still further, the illustrated embodiments employ a structure in which the connector pin is parallel to a longitudinal axis of the main body of the sensor, but other connector configurations may be readily employed. The above are just a few limited examples of possible modifications and variations within the scope of the appended claims.

**Claims**

1. An arrangement of a sensor attachable to an object of attachment (200) wherein the object of attachment is adapted to have a gas passing therethrough in an air-flow direction, the sensor comprising:

   a main body (111) having a longitudinal axis (b);
   a pressure sensor element (104) arranged to measure the pressure of a gas passing through said object of attachment (200), the pressure sensor element (104) being located within the main body (111);
   a temperature sensor element (109) arranged to measure the temperature of said gas, the temperature sensor element (109) being coupled to the main body (111), and
   wherein the temperature sensor element (109) includes a columnar sensor element body (109a) having a central axis (c) and a pair of lead terminals (109b) that extend along the direction of said central axis from both ends of the sensor element body (109a);
   **characterized in that** the main body (111) of the sensor is attachable to said object of attachment (200) at a mounting position at which an angle $\theta_{rq}$, $\theta_{rq} \neq 0°$, is formed between said longitudinal axis (b) of the main body (111) and said air-flow direction; and
   wherein the following equation is fulfilled:

   $$(\theta_{rq} - \theta_{allow}) \leq \theta_{pos} \leq (\theta_{rq} + \theta_{allow})$$

   in which $\theta_{pos}$ is an inclination angle defined between the central axis (c) of the sensor element body (109a) and an axis (c') perpendicular to said longitudinal axis (b) of the main body (111), and $\theta_{allow}$ represents an allowable angle between the central axis (c) of the sensor element body (109a) and said axis (c') perpendicular to said longitudinal axis (b) of the main body (111), within which an allowable response speed of the temperature sensor element (109) is obtained.

2. The arrangement according to claim 1, further comprising a pair of connection fittings (113, 114) to which the pair of lead terminals (109b) are connected respectively, wherein the connection fittings (113, 114) are connected to the pair of lead terminals (109b) and configured to position the central axis (c) of the sensor element body (109a) at the inclination angle $\theta_{pos}$.

3. The arrangement according to claim 1, further comprising a pair of connection fittings (115, 116) to which the pair of lead terminals (109b) are connected respectively, wherein the pair of lead terminals (109b) are connected to the pair of connection fittings (115, 116) and configured to position the central axis (c) of the sensor element body (109a) at the inclination angle $\theta_{pos}$.

4. The arrangement according to claim 1, 2 or 3, wherein the allowable angle $\theta_{allow}$ is 45°.

5. The arrangement according to any one of claims 1 to 4, wherein the object of attachment (200) is an intake manifold.


**Patentansprüche**

1. Anordnung eines Sensors, der an einem Befestigungsgegenstand (200) befestigbar ist, wobei der Befestigungsgegenstand so ausgeführt ist, dass er von einem Gas in einer Luftstromrichtung durchströmbar ist, wobei der Sensor umfasst:

   einen Hauptkörper (111) mit einer Längsachse (b);
   ein Drucksensorelement (104), das zum Messen des Drucks eines durch den Befestigungsgegenstand (200) strömenden Gases angeordnet ist, wobei sich das Drucksensorelement (104) innerhalb des Hauptkörpers (111) befindet;
   ein Temperatursensorelement (109), das zum Messen der Temperatur des Gases angeordnet ist, wobei das Temperatursensorelement (109) mit dem Hauptkörper (111) verkoppelt ist, und
wobei das Temperatursensorelement (109) einen säulenförmigen Sensorelementkörper (109a) umfasst, der eine Mittelachse (c) und ein Paar Leitungsklemmen (109b), die sich entlang der Richtung der Mittelachse von beiden Seiten des Sensorelementkörpers (109a) erstrecken, aufweist;
**dadurch gekennzeichnet, dass** der Hauptkörper (111) des Sensors an dem Befestigungsgegenstand (200) an einer Einbauposition befestigbar ist, an der ein Winkel $\theta_{rq}$, $\theta_{rq} \neq 0°$ zwischen der Längsachse (b) des Hauptkörpers (111) und der Luftstromrichtung gebildet wird; und
wobei die folgende Gleichung erfüllt ist:

$$(\theta_{rq} - \theta_{allow}) \leq \theta_{pos} \leq (\theta_{rq} + \theta_{allow})$$

wobei $\theta_{pos}$ ein Neigungswinkel ist, der zwischen der Mittelachse (c) des Sensorelementkörpers (109a) und einer zu der Längsachse (b) des Hauptkörpers (111) rechtwinkligen Achse (c') definiert wird, und $\theta_{allow}$ einen zulässigen Winkel zwischen der Mittelachse (c) des Sensorelementkörpers (109a) und der zur Längsachse (b) des Hauptkörpers (111) rechtwinkligen Achse (c') darstellt, innerhalb dessen eine zulässige Ansprechgeschwindigkeit des Temperatursensorelements (109) erhalten wird.

2. Anordnung nach Anspruch 1, ferner ein Paar von Verbindungsanschlussteilen (113, 114) umfassend, mit dem das Paar von Leitungsklemmen (109b) entsprechend verbunden ist, wobei die Verbindungsanschlussteile (113, 114) mit dem Paar von Leitungsklemmen (109b) verbunden und dazu konfiguriert sind, die Mittelachse (c) des Sensorelementkörpers (109a) im Neigungswinkel $\theta_{pos}$ zu positionieren.

3. Anordnung nach Anspruch 1, ferner ein Paar von Verbindungsanschlussteilen (115, 116) umfassend, mit dem das Paar von Leitungsklemmen (109b) entsprechend verbunden ist, wobei das Paar von Leitungsklemmen (109b) mit dem Paar von Verbindungsanschlussteilen (115, 116) verbunden und dazu konfiguriert ist, die Mittelachse (c) des Sensorelementkörpers (109a) im Neigungswinkel $\theta_{pos}$, zu positionieren.

4. Anordnung nach Anspruch 1, 2 oder 3, wobei der zulässige Winkel $\theta_{allow}$ 45° beträgt.

5. Anordnung nach einem der Ansprüche 1 bis 4, wobei der Befestigungsgegenstand (200) ein Ansaugkrümmer ist.

**Revendications**

1. Agencement d'un capteur apte à être fixé à un objet de fixation (200) dans lequel l'objet de fixation est conçu pour avoir un gaz passant à travers celui-ci dans une direction de flux d'air, le capteur comprenant :

   un corps principal (111) ayant un axe longitudinal (b) ;
   un élément de capteur de pression (104) agencé pour mesurer la pression d'un gaz passant à travers ledit objet de fixation (200), l'élément de capteur de pression (104) étant situé à l'intérieur du corps principal (111) ;
   un élément de capteur de température (109) agencé pour mesurer la température dudit gaz, l'élément de capteur de température (109) étant couplé au corps principal (111), et
   dans lequel l'élément de capteur de température (109) comprend un corps d'élément de capteur en colonne (109a) ayant un axe central (c) et une paire de bornes conductrices (109b) qui s'étendent le long de la direction dudit axe central à partir des deux extrémités du corps d'élément de capteur (109a) ;
   **caractérisé par le fait que** le corps principal (111) du capteur est apte à être fixé audit objet de fixation (200) au niveau d'une position de montage au niveau de laquelle un angle $\theta_{rq}$, $\theta_{rq} \neq 0°$, est formé entre ledit axe longitudinal (b) du corps principal (111) et ladite direction de flux d'air ; et
   dans lequel l'équation suivante est satisfaite :

$$(\theta_{rq} - \theta_{admis}) \leq \theta_{pos} \leq (\theta_{rq} + \theta_{admis})$$

   dans laquelle $\theta_{pos}$ est un angle d'inclinaison défini entre l'axe central (c) du corps d'élément de capteur (109a) et un axe (c') perpendiculaire audit axe longitudinal (b) du corps principal (111), et $\theta_{admis}$ représente un angle admissible entre l'axe central (c) du corps d'élément de capteur (109a) et ledit axe (c') perpendiculaire audit axe longitudinal (b) du corps principal (111), à l'intérieur duquel une vitesse de réponse admissible de l'élément de capteur de température (109) est obtenue.

2. Agencement selon la revendication 1, comprenant en outre une paire de raccords de connexion (113, 114) auxquels la paire de bornes conductrices (109b) est connectée respectivement, les raccords de connexion (113, 114) étant connectés à la paire de bornes conductrices. (109b) et configurés pour positionner l'axe central (c) du corps d'élément de capteur (109a) au niveau de l'angle d'inclinaison $\theta_{pos}$.

3. Agencement selon la revendication 1, comprenant en outre une paire de raccords de connexion (115, 116) auxquels la paire de bornes conductrices (109b) est connectée respectivement, la paire de bornes conductrices (109b) étant connectée à la paire de raccords de connexion (115, 116) et configurée pour positionner l'axe central (c) du corps d'élément de capteur (109a) au niveau de l'angle d'inclinaison $\theta_{pos}$.

4. Agencement selon la revendication 1, 2 ou 3, dans lequel l'angle admissible $\theta_{admis}$ est de 45°.

5. Agencement selon l'une quelconque des revendications 1 à 4, dans lequel l'objet de fixation (200) est un collecteur d'admission.

# FIG. 1

# FIG. 2

# FIG. 3

# FIG. 4

# FIG. 5

103  104  106          107    108

105

112   111

110
99
101
102

109

100

# FIG. 6

c

200

90°

AIR

100

109a
109b  } 109

(a)

100

200

109b   109a

109

(b)

# FIG. 7

# FIG. 8

RESPONSE TIME OF THE TEMPERATURE SENSOR ELEMENT (sec.) 10%-90%

INCLINATION ANGLE OF THE TEMPERATURE SENSOR ELEMENT (ELEMENT MAIN BODY) (DEGREES)

**EP 1 921 431 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2179161 A
- US 6820479 B
- US 6272913 B1